(19) Europäisches Patentamt
European Patent Office
Office européen des brevets

(11) **EP 2 339 727 A1**

(12) **EUROPEAN PATENT APPLICATION**

(43) Date of publication:
**29.06.2011 Bulletin 2011/26**

(51) Int Cl.:
**H02M 1/42** (2007.01)

(21) Application number: **10252171.3**

(22) Date of filing: **20.12.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Lanni, Thomas W.**<br>**Laguna Niguel**<br>**California 92677 (US)** |
| (30) Priority: **23.12.2009 US 646152** | (74) Representative: **Kenrick, Mark Lloyd et al**<br>**Marks & Clerk LLP**<br>**Sussex House**<br>**83-85 Mosley Street**<br>**Manchester**<br>**M2 3LG (GB)** |
| (71) Applicant: **Comarco Wireless Technologies, Inc.**<br>**Irvine, CA 92618 (US)** | |

(54) **Single-stage single switch power factor correction circuit having isolated output and boost inductor between AC source and bridge rectifier**

(57)    A flyback converter utilizes a boost inductor (L4) coupled between a source of AC power and a bridge rectifier (4) to provide power factor correction. A primary winding (P1) of the flyback transformer (T1) is coupled in series with a storage capacitor (C3) across the output of the bridge rectifier (4). A circuit, which includes a switching transistor (Q1), is also coupled across the output of the bridge rectifier (4) to provide a low resistance path when the switch is closed. The cores of the boost inductor (L4) and the transformer (T1) are loaded with energy when the switch (Q1) is closed. When the switch (Q1) opens, the energy stored in the magnetic cores is transferred to the output via the transformer secondary winding (S1) and rectification circuitry (CRrec).

FIG.1

**Description**

FIELD OF THE INVENTION

The present invention relates to power supplies, also known as power adapters and power converters. In particular, the invention concerns a flyback converter which utilizes a boost inductor coupled between a source of AC power and a bridge rectifier to provide power factor correction.

BACKGROUND OF THE INVENTION

Power factor is the ratio of real power to apparent power. Real power is the average (over a cycle) of the instantaneous product of current and voltage. Apparent power is the product of the RMS value of current times the RMS value of voltage. Real power is the power required to do the needed work. Apparent power is the power that is supplied by the electricity generator (e.g., a power company). If the current and voltage are both sinusoidal and in phase, the power factor is 1. If the current and voltage are both sinusoidal, but not in phase, the power factor is equal to the cosine of the phase angle ("θ") between the current and voltage waveforms. In cases where the load (as seen by the supply line) is composed of resistive, capacitive and inductive elements which behave linearly, both the current and voltage are sinusoidal and the power factor = cosine θ definition of power factor is applicable. If the load appears purely resistive, the current and voltage are in phase (due to no reactive impedance), in which case apparent power equals real power, i.e., the power factor is 1 (the cosine of 0° = 1).

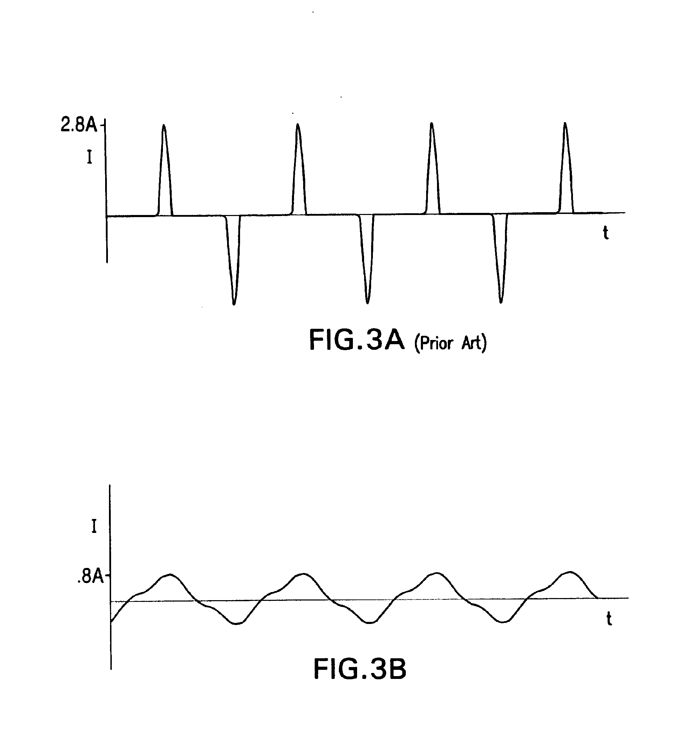

Most power supplies, however, present a non-linear rather than a linear, load impedance to the AC mains. This is because the power supply input circuit typically consists of a half-wave or full-wave rectifier followed by a storage capacitor. The capacitor is charged to maintain a voltage approximately equal to the peak of the input sine wave until the next peak arrives to recharge the capacitor. As a result, current is drawn from the input only during the relative short period of time when the input voltage waveform is near its peak. For a 240 VAC at 50 Hz supply voltage, Fig. 3A depicts the input current of a typical switched-mode power supply without any power factor correction (PFC).

Although the sinusoidal input voltage waveform is not shown in Fig. 3A, the input current waveform is in phase with such input voltage waveform. Utilizing only the "cosine θ" definition of power factor would lead to the conclusion that the power supply has a power factor of 1, which is not the case.

When the input voltage is sinusoidal, but the input current is not (as in Fig. 3A), power factor consists of two components: i) the displacement factor related to the phase angle; and ii) a distortion factor related to wave shape. Expressed as a function of the total harmonic distortion (THD%) of the current waveform, the distortion factor, Kd, is calculated by the following equation:

$$\text{Kd} = \frac{1}{\sqrt{1 + \left(\frac{\text{THD (\%)}}{100}\right)^2}} \qquad (1)$$

If the fundamental component of the input current is in phase with the input voltage, the power factor is determined only by the distortion factor Kd, set forth above. As an example for such a case, a 10% THD of the current waveform corresponds to a power factor PF of approximately .995.

High harmonic content in the current waveform not only lowers the power factor, the harmonics may travel down the neutral line of the AC mains and disrupt other devices connected thereto. The European Union has adopted regulations (EN61000-3-2) which establish limits on the harmonics of the AC input current up to the 40th harmonic. The regulations are more vigorous with respect to personal computers, PC monitors and television receivers than with respect to other devices.

To lower the harmonic content of the current waveform and improve power factor, so-called power factor correction circuits are utilized. Power factor correction is potentially attainable utilizing passive circuitry. However, due to component size constraints, power factor correction circuits which use active circuits are more common.

Conventionally, the active power factor correction circuitry is placed between the input rectifier and the storage capacitor. In single-stage power factor corrected converters, a power factor correction stage is combined with DC/DC conversion circuitry. Examples of such circuits are discussed in i) Qian, Jinrong, "Advanced Single-Stage Power Factor Correction Techniques," Virginia Polytechnic Institute and State University Ph.D. Dissertation, September 25, 1997, pp.

i-xi, 1-175 (see section 2.4 thereof and Fig. 2.11 in particular); ii) U.S. Patent No. 6,108,218 (see Figs. 1-5 thereof); iii) U.S. Patent No. 6,473,318 (see Fig. 9 thereof); and iv) U.S. Patent No. 6,751,104 (see Figs. 5 and 12 thereof).

These prior art circuits include a bridge rectifier, a transformer, a switch and storage capacitor in various configurations. These circuits employ an auxiliary transformer winding in the current path as, or in addition to, a boost inductor which is located on the output side of the bridge rectifier. Such configurations require use of at least one diode in addition to those utilized in the bridge rectifier to prevent back voltage stress on the bridge rectifier. Such an arrangement increases component count and associated cost.

SUMMARY OF THE INVENTION

The present invention is a flyback converter which utilizes a boost inductor coupled between the source of AC power and the bridge rectifier to provide power factor correction. A primary winding of the flyback transformer is coupled in series with a storage capacitor across the output the bridge rectifier. A circuit which includes a switch, preferably a switching transistor, is also coupled across the output of the bridge rectifier to provide a low resistance path when the switch is closed.

When the switch is closed, energy from the AC power source is stored in the magnetic core of the boost inductor and simultaneously energy from the storage capacitor is stored in the magnetic core of the flyback transformer. When the switch opens, the energy stored in the boost inductor magnetic core is released as current which flows through the primary winding to the storage capacitor, and simultaneously the energy stored in the magnetic core of the flyback transformer is released. The flow of current through the transformer primary and the release of the energy stored in the transformer magnetic core result in current flow in the secondary winding of the transformer, which current is rectified to generate a DC output voltage.

A control circuit controls the on/off state of the switching transistor. When the switching transistor is on, the control circuit compares the current flowing through the transistor to a feedback signal proportional to the DC output voltage. Based on the comparison, the control circuit determines when sufficient energy has been delivered to the magnetic cores of the boost inductor and the transformer to maintain the desired output voltage. When the condition is met, the control circuit causes the switching transistor to turn off. By monitoring an auxiliary transformer winding, the control circuit cases the transistor to remain off until all of the energy stored in the magnetic cores of the boost inductor and transformer has been delivered to the seconding winding.

In a preferred embodiment, the primary of the flyback transformer includes two primary windings with the storage capacitor coupled therebetween. Likewise, the boost inductor includes two windings wound around a common magnetic core. Each of the boost inductor windings is coupled between a converter input terminal and an input to the bridge rectifier. An EMI filter may be disposed between the converter input terminals and the boost inductor.

BRIEF DESCRIPTION OF THE DRAWINGS

Fig. 1 is a combination block diagram/schematic diagram of a circuit according to an embodiment of the invention;
Fig. 2A is a portion of a schematic diagram according to a preferred embodiment of the invention;
Fig. 2B is another portion of the schematic diagram according to the preferred embodiment of the invention;
Fig. 3A illustrates a current waveform for a prior art power supply without power factor correction; and
Fig. 3B illustrates a current waveform for the power supply according to an embodiment of the invention.

DETAILED DESCRIPTION OF THE PREFERRED EMBODIMENT

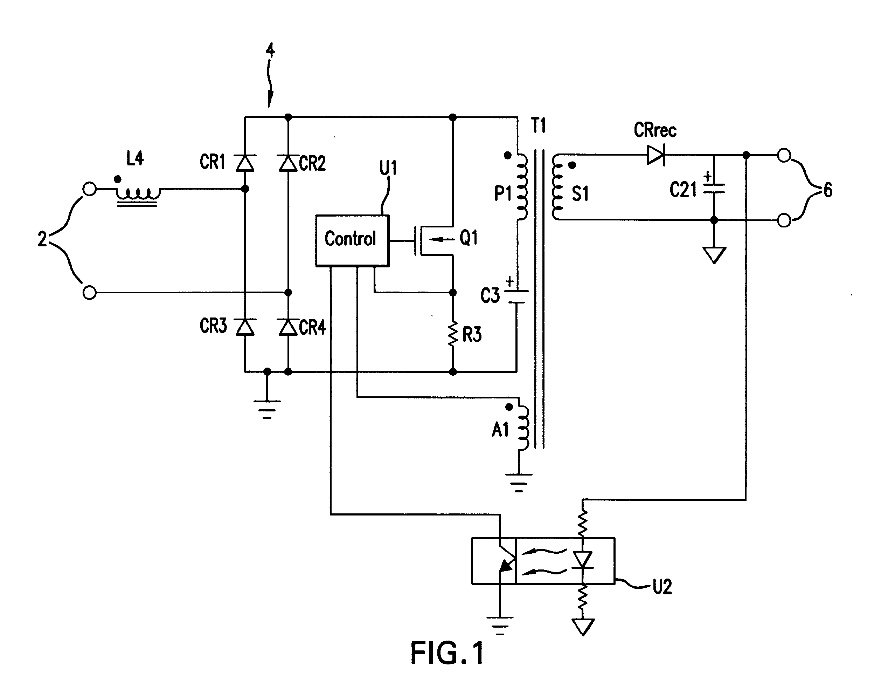

Referring to Fig. 1, there is shown a combination block diagram/schematic diagram which illustrates a configuration of the invention. A pair of input terminals 2 receives a source of AC power. The applied AC voltage may be 120 VAC at 60 Hz, 240 VAC at 50 Hz or some other values of line voltage and line frequency.

A boost inductor L4 is coupled at one end of its winding to one of the input terminals 2 and at the other end of its winding to an input of a bridge rectifier 4. The winding is wound around a magnetic core. The bridge rectifier 4 is comprised of diodes CR1-CR4 configured in the usual fashion to provide full wave rectification of the AC input voltage. As explained below, the bridge rectifier also periodically passes current resulting from the release of energy stored in the magnetic core of the boost inductor L4. The second input of the bridge rectifier 4 is coupled to the second of the input terminals 2.

One of the outputs of the bridge rectifier 4 is connected to ground, i.e., primary side DC ground. The other of the bridge rectifier outputs, defined by the junction of the cathodes of diodes CR1, CR2, is coupled to one input of a primary winding P1 of transformer T1. The other end of the primary winding P1 is coupled to a first terminal of capacitor C3. The capacitor C3 is preferably a bulk storage capacitor, in which case the primary winding is coupled to the positive terminal of the capacitor. The other terminal of capacitor C3 is connected to ground. The primary winding P1 of transformer T1 is wound around a magnetic core. The transformer windings may be wires, but in the preferred embodiment, they are circuit traces patterned on a circuit board.

A transistor Q1, which acts as a switch, is coupled across the output of the bridge rectifier 4. For current monitoring purposes, a very small value resistor R3 is coupled in series with the transistor Q1 across the output of the bridge rectifier. That is, for the N-channel transistor Q1, the drain of the transistor is coupled to the node defined by the junction of the bridge rectifier output and the primary winding P1 of transformer T1, and the source of transistor Q1 is coupled to a first end of the resistor R3, the second end of which is coupled to ground.

A control circuit U1 provides a signal to the gate of transistor Q1 to control the transistor to be on or off. The control circuit U1 illustratively has three inputs. The first is the voltage across the small value resistor R3. This voltage is proportional to the current flowing through the transistor Q1 when the transistor is on, i.e., the switch is closed. A second input to the control circuit U1 is provided by an auxiliary winding A1 which is wound around the same magnetic core of the transformer T1 as primary winding P1. As noted by the dots adjacent windings P1 and A1, these windings are in the same phase relationship around the core of transformer T1. The third input to the control circuit U1 is a feedback control signal, the magnitude of which is determined by the output voltage delivered to the load which the converter circuit is powering. As illustrated in Fig. 1, the feedback signal is provided by the output of an optocoupler U2, the input of which is coupled to the converter output. Use of the optocoupler provides isolation between the primary and secondary sides of the converter.

The secondary side of the converter includes a secondary winding S1 which is wound around the same magnetic core as the primary winding P1 is wound. The dots adjacent windings P1 and S1 show that the windings are in the same phase relationship. One end of the secondary winding is coupled to secondary side ground. The other end of the secondary winding S1 is coupled to the anode of rectifier diode CRrec. The cathode of diode CRrec is coupled to a first terminal of capacitor C21, the other terminal of which is connected to secondary side ground. The output terminals 6 of the power converter provide a regulated DC output voltage.

In operation, the control circuit U1 controls the transistor to turn on and off at a frequency which is many times faster than the line frequency of the AC input voltage. For example, the switching frequency of the transistor may be in the range of 50 - 120 KHz, while the AC line frequency may be in the range of 50-60 Hz. In the preferred embodiment as explained below, the switching frequency varies as a function of load, and for a constant load, as a function of the phase of the AC input voltage.

When AC power is first applied to the input terminals 2, the control circuit U1 controls the transistor Q1 to be off. Current will flow through bridge rectifier 4 and through winding P1 so that capacitor C3 is charged to the peak of the line voltage, illustratively on the order of 170 VDC for a 120 V RMS AC input voltage, or 340 V DC for a 240 V RMS AC input voltage. During this time, no net energy is stored in the core of inductor L4 since any temporarily stored energy is provided to the capacitor C3 as charging current.

Subsequently, the control circuit U1 causes the transistor Q1 to turn on. As a result, a very low resistance path (nearly a short circuit, but for the presence of the low value resistor R3) is provided across the output of the bridge rectifier 4. This causes energy to be stored in the magnetic core of the inductor L4. In this circuit, the current path is L4, CR1, drain to source of Q1, R3, CR4; or CR2, drain to source of QI, R3, CR3, and L4. At the same time, current from the positive terminal of the charged capacitor C3 flows through the primary winding P1 of transformer T1, then from the drain to source of the transistor Q1, through R3 to the negative terminal of the capacitor C3. The flow of current through the primary winding P1 of the transformer T1 causes energy to be stored in the magnetic core of the transformer T1.

Thus, closure of the transistor Q 1 switch creates two parallel circuits which have current flowing in the same direction (drain to source) through the transistor Q1. In the first circuit, the AC line acts as a source to load the magnetic core of the inductor L4 with energy. In the second circuit, the capacitor C3 acts as a DC voltage source to load the magnetic core of the transformer T1 with energy.

During the time the transistor Q1 switch is closed, the control circuit U1 compares the voltage across R3 (which depends on the current through transistor Q1) to the feedback signal from the optocoupler U2. Based on this comparison, the control circuit U1 determines when sufficient energy has been delivered to the magnetic cores of inductor L4 and transformer T1 for the converter (upon delivery of such energy to the secondary) to maintain the desired voltage and current output levels for the present load. Once the condition is met, the control circuit U1 causes the transistor Q1 to turn off, i.e., the switch to open.

When the transistor Q1 switch opens, the voltage on the primary winding P1 wants to rapidly increase ("flyup"). However, the primary voltage is clamped to some value dependent on the voltage across the secondary winding (which is substantially equal to the DC output voltage) and the turns ratio of the transformer T1. For example, if the output voltage (the voltage across capacitor C21) is 20V and the turns ratio of the transformer T1 is 4:1, the voltage across the primary P1 is clamped to approximately 80V. With the transistor Q1 off, there is no return path for the primary winding. Accordingly, the energy stored in the core of transformer T1 is "dumped" by the transformer into the secondary winding S1 as current, which flows into capacitor C21 and to the output load.

Additionally, when transistor Q1 turns off, the energy stored in the boost inductor L4 results in the flow of current from the inductor L4 through the primary winding P1 to capacitor C3. The current to capacitor C3 (re-) charges the capacitor. The current flowing through the primary winding P1 is delivered, via transformer T1, to the secondary winding S1 to charge capacitor C21 and provide current to the output load. Assuming again a 4:1 turns ratio for the transformer T1, the amount of current delivered to capacitor C21 by the secondary winding S1 is approximately four times the amount of the primary current. The amount of current relatively delivered to capacitors C3 and C21 is a function of their relative capacitance values, as well as the turns ratio of transformer T1.

In addition to the secondary winding S1, the transformer T1 includes the auxiliary winding A1 through which (a relatively small amount of) current is induced to flow by the energy dumped from the core of transformer T1 and by the current flowing the primary winding P1. As indicated by the dots adjacent the primary winding P1 and the auxiliary winding A1 in Fig. 1, the windings are wound around the core of transformer T1 in the same phase relationship. Via the auxiliary winding A1, the control circuit U1 monitors the voltage across the auxiliary winding A to determine when the secondary current reaches zero (alternatively, to determine when the secondary current reverses direction). At such point, the cores of the boost inductor L4 and the transformer T1 have delivered all of their energy. In the preferred embodiment, such point in time (or a small delay thereafter) is when the control circuit U1 turns transistor Q1 back on to repeat the loading of the boost inductor L4 magnetic core by the AC power source and of the transformer T1 magnetic core by the bulk storage capacitor C3.

Once the primary current has decayed to zero, with the transistor Q1 off, the capacitance of the transistor in combination with the primary winding inductance and capacitance form a resonant circuit. Depending on values for the capacitance and inductance, such circuit has a resonant frequency of a few megahertz. Turning on the transistor Q1 just as (or slightly after) the circuit commences to resonant operates the flyback converter in the so-called quasi-resonant mode. Thus, the quasi-resonant mode of operation is preferably used.

When the circuit of Fig. 1 is operated in the quasi-resonant mode, the transistor Q1 will turn on at the point in time at which all of the energy from the cores of inductor L4 and transformer T1 has been delivered to the secondary. The duration for which transistor Q1 is on varies as a function of load and as a function of the phase of the AC input voltage. Concerning frequency variations as a function of load, it will be assumed that the switching frequency of the transistor Q1 is observed when the AC input voltage is at the same phase (e.g., at its positive peak) for two different load conditions. With this assumption, the switching frequency will decrease with an increasing load, and will increase for a decreasing load. This is because transistor Q1 has to stay on longer for the cores of inductor L4 and transformer T1 to accumulate the additional energy needed for an increased load and has to stay off longer to provide such additional energy to the load.

For a constant load condition, the switching frequency of the transistor Q1 is lower when the AC input voltage is at or near the zero axis as compared to when the AC input voltage waveform is at or near its peak. When the AC input voltage is at or near its peak, the boost inductor is able to accumulate in its core substantial energy in a relatively short time. Similarly, when the AC input voltage is at or near its peak, the transformer T1 core is able to store in its core the remainder of the needed energy from C3 in a relatively short time. On the other hand, when the AC input voltage is at or near the zero axis, the boost inductor can accumulate in its core only a relatively small amount of energy within a given time. Accordingly, most of the energy to be delivered to the secondary must be accumulated in the transformer core from C3. Because the AC input voltage is small (the waveform is at or near the zero axis), the time needed for sufficient energy to be accumulated within the transformer core is relatively long. For a constant load, the amount of time required to deliver the accumulated energy to the secondary winding S1 is the same in both cases. But because the energy accumulation period is longer when the AC voltage is near the zero axis, the switching frequency is lower than when the AC voltage is near its peak. Illustratively, the switching frequency is approximately twice as high when the AC input voltage is at or near its peak as compared to when the AC input voltage is at or near the zero axis.

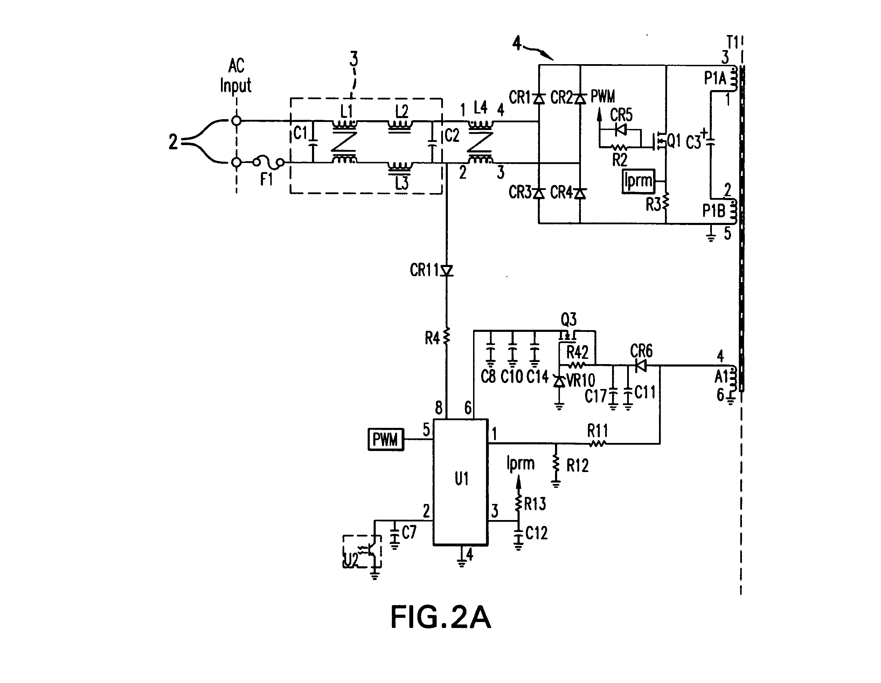

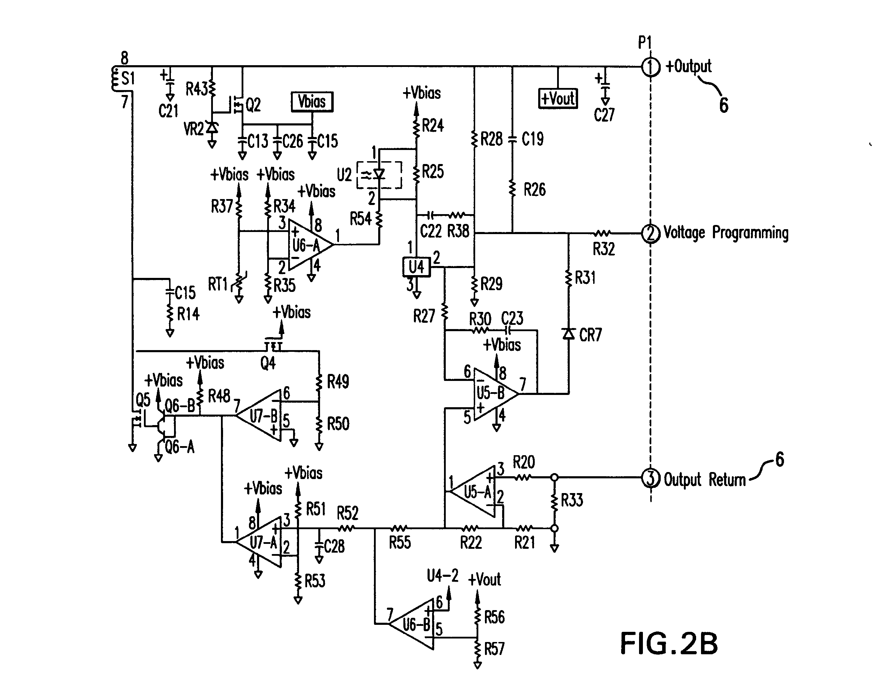

Figs. 2A and 2B together constitute a schematic diagram of a circuit according to a preferred embodiment of the invention. The figures are divided at the isolation boundary represented by the dashed line extending vertically on the right side of Fig. 2A. That is, Fig. 2A illustrates the circuitry on the primary side, and Fig. 2B illustrates the circuitry on the secondary side.

Referring to Fig. 2A, AC power is received at the input terminals 2. One of the inputs of the converter is coupled to a fuse F1. Following the fuse is a filter 3, comprised of inductors L1, L2, L3 and capacitors C1, C2. The filter 3 suppresses electromagnetic interference (EMI) produced by the converter.

The circuit of Fig. 2 utilizes a balanced architecture in the sense that the primary of the transformer T1 consists of two windings PIA, PIB with bulk storage capacitor C3 coupled in series between the two primary windings. This architecture is beneficial in the suppression of common mode noise applied to the input of converter.

Following the EMI filter is the boost inductor L4. Owing to the balanced architecture, the boost inductor has two windings wound around a common magnetic core. As shown by the dots adjacent the illustrated windings, the windings are wound in opposite phase relationship around the common magnetic core. One of the windings of boost inductor L4 is coupled at one end to a first of the AC input lines, via the EMI filter, and at the other end to a first input of the bridge rectifier 4. The second of the windings of the boost inductor L4 is coupled at one end to the second of the AC input lines, via the EMI filter and the fuse, and at the other end to the second input of the bridge rectifier 4. As in Fig. 1, the bridge rectifier 4 is comprised of diodes CRI-CR4 configured in the usual fashion. The junction of the anodes of diodes CR3 and CR4 is connected to primary side ground.

The junction of the cathodes of diodes CR1 and CR2 serve as the positive output of the bridge rectifier, which is coupled to one end of primary winding PIA of transformer T1. The other end of winding P1A is coupled to the positive input terminal of the bulk storage capacitor C3. The other terminal of the capacitor C3 is coupled to one end of primary winding P1B of transformer T1. The other end of winding PIB is connected to primary side ground.

The drain of the switching transistor Q1 is connected to the positive output of the bridge rectifier 4 and the first end of primary winding P1A. The source of transistor Q1 is coupled to one end of the resistor R3, the other end of which is connected to primary side ground. The gate of transistor Q1 is coupled to pin 5 of the control circuit UI, via the parallel connection of CR5 and resistor R2.

The control circuit U1 is preferably a Fairchild Semiconductor® FAN6300 Quasi-Resonant Current Mode Pulse Width Modulation (PWM) Controller. When AC power is initially applied to the converter, the control circuit U1 derives its start up power from the AC input to which the circuit U1 is coupled via diode CR11 and resistor R4. Once pin 6 of the control circuit U1 is provided with a sufficient voltage, the circuit U1 takes its supply voltage VDD from such pin. The VDD supply voltage is provided by regulator circuitry which includes transistor Q3, zener diode VR10 and rectifier diode CR6. The regulator circuitry receives current from the auxiliary winding A1 of the transformer T1. Once the converter has completed several switching cycles, the regulator circuitry supplies a sufficient VDD voltage to power the control circuit U1 and the internal start-up power circuitry is disabled.

The non-grounded end of auxiliary winding A1 is coupled via a resistor divider R11, R12 to the detect pin 1 of the control circuit U1. The control IC uses this input to determine when the flow of current through the primary winding (with the transistor Q1 off) has decayed to zero (or reversed direction) so that the control IC will, via the PWM signal, turn the transistor Q1 on to load the magnetic cores of boost inductor L4 and transformer T1. As previously noted, the control circuit U1 preferably controls the converter to operate in the quasi-resonant mode.

The transistor Q1 is turned on by the control circuit U1 for the period of time needed for the magnetic cores of the boost inductor L4 and transformer T1 to be loaded with energy sufficient to maintain the desired output voltage and output current based on the present load. To make such determination, the control IC senses at pin 3 (via the voltage across the resistor R3) the current flow through the transistor and compares it to the feedback signal (received at pin 2) provided by the phototransistor of the optocoupler U2.

Referring to Fig. 2B, the light emitting diode portion of the photocoupler U2 is coupled to Vout (connector P1 pin1) and a voltage programming control input (connector P1 pin 2) to provide to the phototransistor of U2 an optical signal indicative of the difference between the actual magnitude of Vout and the desired magnitude of Vout. The phototransistor of U2 converts the optical signal to the feedback signal provided to the control circuit U1 on the primary side of the isolation boundary. The photocoupler U2 is, for example, a NEC® PS2561 photocoupler.

Still referring to Fig. 2B, the primary winding S1 has one of its ends connected to the positive terminals of capacitors C21 and C27 to provide Vout. Rectification of the secondary current is synchronously provided by the body diode of the transistor Q5. The drain of transistor Q5 is coupled to the secondary winding and its source is connected to secondary side ground. Via transistors Q6A and Q6B, the gate of the transistor Q5 is coupled to the output of comparator U7-B. The inventing input of the comparator U7-B is coupled, via a divider network R49, R50 and a transistor Q4 to the secondary winding S1. The non-inverting input of the comparator U7-B is connected to secondary side ground. Use of synchronous rectification lowers conduction losses associated with diode rectification.

The circuit of Fig. 2 operates as described above for the circuit of Fig. 1. The prior art power supply which produced the input current waveform of Fig. 3A was replaced by the circuit of Fig. 2 using the same load and input voltage. The waveform of the input current drawn by the Fig. 2 circuit is shown in Fig. 3B. As can be seen, the Fig. 2 circuit lowers the peak current drawn by a factor of approximately 3.5 compared to the prior art power supply. Additionally, the Fig. 2 circuit substantially expands the current waveform to result in a waveform which is much more sinusoidal. The Fig. 2 circuit was measured to have a power factor of .95, with harmonic content below the limits specific by European Union regulation EN61000-3-2.

While the description above refers to particular embodiments of the present invention, it will be understood that many modifications may be made without departing from the spirit thereof. The following claims are intended to cover such modifications as would fall within the true scope and spirit of the present invention. The presently disclosed embodiments are therefore to be considered in all respects as illustrative and not restrictive, the scope of the invention being indicated by the claims, rather than the foregoing description, and all changes which come within the meaning and range of equivalency of the claims are therefore intended to be embraced therein.

**Claims**

1. A power converter comprising:

   a pair of input terminals to receive an AC voltage;
   a bridge rectifier having a pair of inputs and a pair of outputs;
   a boost inductor coupled between at least one of the input terminals and one of the bridge rectifier inputs;
   a transformer having a primary winding and a secondary winding, a first terminal of the primary winding being coupled to one of the bridge rectifier outputs;
   a storage capacitor, a first terminal of the storage capacitor being coupled to a second terminal of the primary winding and a second terminal of the storage capacitor being coupled to the other of the bridge rectifier outputs;
   circuitry, including a switch, to provide a low resistance path across the pair of bridge rectifier outputs when the switch is closed; and
   rectification circuitry coupled to the secondary winding to generate a DC output voltage.

2. The power converter of claim 1, wherein the switch is a transistor.

3. The power converter of claim 2 including a control circuit to provide a control signal to the transistor to selectively turn the transistor on and off.

4. A power converter comprising:

   first and second input terminals to receive on AC voltage;
   a bridge rectifier having first and second input terminals and first and second output terminals;
   a boost inductor having first and second windings wound around a same magnetic core, a first terminal of the first winding being coupled to the first input terminal, a second terminal of the first winding being coupled to the bridge rectifier first input terminal, a first terminal of the second winding being coupled to the second input terminal, and a second terminal of the second winding being coupled to the bridge rectifier second input terminal;
   a transformer having first and second primary windings and a secondary winding, one terminal of the first primary winding being coupled to the bridge rectifier first output terminal and one terminal of the second primary winding being coupled to the bridge rectifier second output terminal;
   a storage capacitor coupled between the other of the input terminals of the first and second primary windings;
   circuitry, including a switch, to provide a low resistance path across the bridge rectifier first and second output terminals when the switch is closed; and
   rectification circuitry coupled to the secondary winding to generate a DC output voltage.

5. The power converter of claim 4, wherein the first terminal of the boost inductor first winding is coupled to the first input terminal via an EMI filter.

6. The power converter of claim 5, wherein the first terminal of the boost inductor second winding is coupled to the second input terminal via the EMI filter.

7. The power converter of any one of claims 4 to 6, wherein the switch is a transistor and the power converter includes a control circuit to provide a control signal to the transistor to selectively turn the transistor on and off.

8. The power converter of claim 3 or 7, wherein the transformer includes an auxiliary winding, a terminal of the auxiliary winding being coupled as an input to the control circuit.

9. The power converter of claim 8, wherein the control circuit receives as additional inputs a first signal indicative of current flowing through the transistor when the transistor is on and a second signal indicative of a magnitude of the DC output voltage.

10. The power converter of claim 8 or 9, wherein the primary winding, the secondary winding and the auxiliary winding are wound around a same magnetic core.

11. A power converter comprising:

   a pair of input terminals to receive an AC voltage;

a bridge rectifier having a pair of inputs and a pair of outputs;

a boost inductor, having a magnetic core, coupled between at least one of the input terminals and one of the bridge rectifier inputs;

a transformer having a magnetic core, a primary winding and a secondary winding, a first terminal of the primary winding being coupled to one of the bridge rectifier outputs;

a storage capacitor, a first terminal of the storage capacitor being coupled to a second terminal of the primary winding and a second terminal of the storage capacitor being coupled to the other of the bridge rectifier outputs;

a switch which when closed causes energy from the AC voltage to be stored in the boost inductor magnetic core and simultaneously causes energy from the storage capacitor to be stored in the transformer magnetic core, and which when open causes the energy stored in the boost inductor magnetic core to be released as current which flows through the primary winding to the storage capacitor and simultaneously causes the energy stored in the transformer magnetic core to be released; and

rectification circuitry, which receives via the secondary winding induced current resulting from the primary winding current and the transformer core energy release, to generate a DC output voltage.

12. A power converter comprising:

first and second input terminals to receive an AC voltage;

a bridge rectifier having first and second input terminals and first and second output terminals;

a boost inductor having first and second windings wound around a same magnetic core, a first terminal of the first winding being coupled to the first input terminal, a second terminal of the first winding being coupled to the bridge rectifier first input terminal, a first terminal of the second winding being coupled to the second input terminal, and a second terminal of the second winding being coupled to the bridge rectifier second input terminal;

a transformer having first and second primary windings and a secondary winding, one terminal of the first primary winding being coupled to the bridge rectifier first output terminal and one terminal of the second primary winding being coupled to the bridge rectifier second output terminal;

a storage capacitor coupled between the other of the input terminals of the first and second primary windings;

a switch which when closed causes energy from the AC voltage to be stored in the boost inductor magnetic core and simultaneously causes energy from the storage capacitor to be stored in the transformer magnetic core, and which when open causes the energy stored in the boost inductor magnetic core to be released as current which flows through the primary windings to the storage capacitor and simultaneously causes the energy stored in the transformer magnetic core to be released; and

rectification circuitry, which receives via the secondary winding induced current resulting from the primary windings current and the transformer core energy release, to generate a DC output voltage.

13. The power converter of claim 11 or 12, wherein the switch is a transistor and the power converter includes a control circuit to selectively turn the transistor on and off.

14. The power converter of claim 13, wherein the control circuit causes the power converter to operate in a quasi-resonant mode.

15. The power converter of claim 14, wherein for a constant load, the control circuit causes the transistor to switch at a frequency which is approximately twice as high when the AC voltage is at or near its maximum as compared to when the AC voltage is at or near its minimum.

FIG.1

EP 2 339 727 A1

FIG.2A

EP 2 339 727 A1

FIG.2B

2.8A

I

t

FIG.3A (Prior Art)

I

.8A

t

FIG.3B

Europäisches
Patentamt

European
Patent Office

Office européen
des brevets

# EUROPEAN SEARCH REPORT

Application Number

EP 10 25 2171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 149 097 B1 (SHTEYNBERG ANATOLY [US] ET AL) 12 December 2006 (2006-12-12) * column 1, line 23 - line 28; figures 1,2 * | 1-3,11 | INV. H02M1/42 |
| X | QIAN J ET AL: "SINGLE-STAGE SINGLE-SWITCH POWER FACTOR CORRECTION (S4-PFC) AC/DC CONVERTERS WITH DC BUS VOLTAGE FEEDBACK FOR UNIVERSAL LINE APPLICATIONS", APEC '98. 13TH ANNUAL APPLIED POWER ELECTRONICS CONFERENCE AND EXPOSITION. ANAHEIM, CA, FEBR. 15 - 19, 1998; [ANNUAL APPLIED POWER ELECTRONICS CONFERENCE], NEW YORK, NY : IEEE, US, 15 February 1998 (1998-02-15), pages 223-229, XP000873671, DOI: DOI:10.1109/APEC.1998.647695 ISBN: 978-0-7803-4341-2 * page 224 - page 226 * | 1-3,11 | |
| A | BORGONOVO ET AL: "A Self-Controlled Power Factor Correction Single-Phase Boost Pre-Regulator", POWER ELECTRONICS SPECIALISTS CONFERENCE, 2005. PESC '05. IEEE 36TH, IEEE, PISCATAWAY, NJ, USA, 1 January 2005 (2005-01-01), pages 2351-2357, XP031000460, DOI: DOI:10.1109/PESC.2005.1581961 ISBN: 978-0-7803-9033-1 * left hand column; page 2351; figure 1 * | 1-3,11 | TECHNICAL FIELDS SEARCHED (IPC) H02M G05F H02J |
| A | US 2003/174521 A1 (BATARSEH ISSA [US] ET AL BATARSEH ISSA [US] ET AL) 18 September 2003 (2003-09-18) * paragraph [0032] - paragraph [0050]; figures 1-4 * | 1-15 | |

-/--

The present search report has been drawn up for all claims

| Place of search | Date of completion of the search | Examiner |
|---|---|---|
| Munich | 7 March 2011 | Braccini, Roberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 10 25 2171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | REDL R ET AL: "A new family of single-stage isolated power-factor correctors with fast regulation of the output voltage", POWER ELECTRONICS SPECIALISTS CONFERENCE, PESC '94 RECORD., 25TH ANNUA L IEEE TAIPEI, TAIWAN 20-25 JUNE 1994, NEW YORK, NY, USA,IEEE, 20 June 1994 (1994-06-20), pages 1137-1144, XP010121360, DOI: DOI:10.1109/PESC.1994.373825 ISBN: 978-0-7803-1859-5 * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 7 March 2011 | Braccini, Roberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

14

**ANNEX TO THE EUROPEAN SEARCH REPORT
ON EUROPEAN PATENT APPLICATION NO.**                    EP 10 25 2171

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2011

| Patent document cited in search report | Publication date | Patent family member(s) | Publication date |
|---|---|---|---|
| US 7149097      B1 | 12-12-2006 | NONE | |
| US 2003174521   A1 | 18-09-2003 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6108218 A
- US 6473318 B
- US 6751104 B

**Non-patent literature cited in the description**

- **QIAN, JINRONG.** Advanced Single-Stage Power Factor Correction Techniques. *Virginia Polytechnic Institute and State University Ph.D. Dissertation,* 25 September 1997, i-xi1-175